# EUROPEAN PATENT APPLICATION

(11) **EP 2 273 295 A1**
(43) Date of publication of application: **12.01.2011**
(21) Application number: 10251194.6
(22) Date of filing: 01.07.2010
(51) Int. Cl.: G02B 6/44, H02B 1/30, H02G 3/08

(54) **Network cabinet fitting system**

(30) Priority: 06.07.2009 US 223126 P; 10.06.2010 US 813056
(71) Applicant: Caveney, Jack E., North Palm Beach, FL 33408 (US); Hartman, Scott R., Oak Forest IL 06452 (US)
(72) Inventor: Caveney, Jack E., North Palm Beach, FL 33408 (US); Hartman, Scott R., Oak Forest IL 06452 (US)
(74) Representative: Bollinghaus, Emer

(57) **Abstract**

A network cabinet fitting system includes a grommet, a corrugated tube fitting assembly and a filler panel. The grommet and the filler panel are installed within an opening of a network cabinet top. The fitting assembly is secured around a corrugated tube and inserted into the grommet to seal the opening.

## Description

### Cross-Reference to Related Applications

This application claims priority to U.S. Provisional Application No. 61/223,126, filed July 6, 2009, the subject matter of which is hereby incorporated by reference in its entirety.

### Background of the Invention

The present invention relates to a network cabinet fitting system and, more particularly, to a fitting system that is secured to a top opening of a network cabinet for fiber cables passing through a corrugated tube.

Typically, network cabinets have knockouts or removable openings of various sizes to allow cables to enter and exit the cabinet. When cables are run in or out of the cabinet, air within the cabinet may escape through the openings and around the cables and adversely affect the cabinet cooling systems.

Therefore, there is a need for a network cabinet fitting system that seals around cables to reduce air leaks.

### Summary

The present invention is directed to a fitting system that seals openings in the top of a network cabinet to improve cooling of the network equipment located in the network cabinet. The fitting system includes a grommet, a fitting assembly and a filler panel. The grommet is secured in one of the openings in the top of the network cabinet. The fitting assembly is secured to the grommet. The fitting assembly extends partially along the perimeter of the opening in the top of the network cabinet. The filler panel seals the remaining opening adjacent to the fitting assembly in the top of the network cabinet. Alternatively, the fitting assembly extends along the entire perimeter of the opening in the top of the network cabinet.

### Brief Description of the Drawings

Fig. 1 is a top perspective view of a network cabinet fitting system according to the present invention;

Fig. 2 is a bottom perspective view of a large cover for the fitting system of Fig. 1;

Fig. 3 is a bottom perspective view of a small cover for the fitting system of Fig. 1;

Fig. 4 is a top perspective view of the fitting system of Fig. 1, wherein a corrugated tube is not shown;

Fig. 5 is a top perspective view of the fitting system of Fig. 1, wherein an alternate grommet is installed in the large opening;

Fig. 6 is a bottom perspective view of the fitting system of Fig. 1, wherein a foam insert is installed on a first portion of a corrugated tube fitting assembly;

Fig. 7 is a top perspective view of the fitting system of Fig. 1, wherein the corrugated tube is not shown;

Fig. 8 is a top perspective view of the corrugated tube fitting assembly for the fitting system of Fig. 1, wherein the fitting assembly is secured to a small grommet;

Fig. 9 is a top perspective view of the small grommet of Fig. 8;

Fig. 10 is a bottom perspective view of a portion of the fitting assembly of Fig. 8, wherein a foam insert is being installed;

Fig. 11 is a bottom perspective view of the portion of the fitting assembly of Fig. 8, wherein the foam insert is installed;

Fig. 12 is a top perspective view of the portion of the fitting assembly of Fig. 8, wherein the foam insert is installed;

Fig. 13 is a top perspective view of a portion of the network cabinet top of Fig. 1, prior to installation of the fitting system;

Fig. 14 is a top perspective view of the network cabinet top of Fig. 13, wherein the large cover has been removed and the corrugated tube has been aligned with the cabinet top opening;

Fig. 15 is a top perspective view of the network cabinet top of Fig. 14, wherein the small grommet, filler panel and cables have been installed;

Fig. 16 is a top perspective view of the network cabinet top of Fig. 15, wherein the fitting assembly is being secured around the corrugated tube;

Fig. 17 is a top perspective view of the network cabinet top of Fig. 16, wherein the fitting assembly has been secured around the corrugated tube; and

Fig. 18 is a top perspective view of the network cabinet top of Fig. 17, wherein the fitting system has been installed in the cabinet top opening.

### Detailed Description

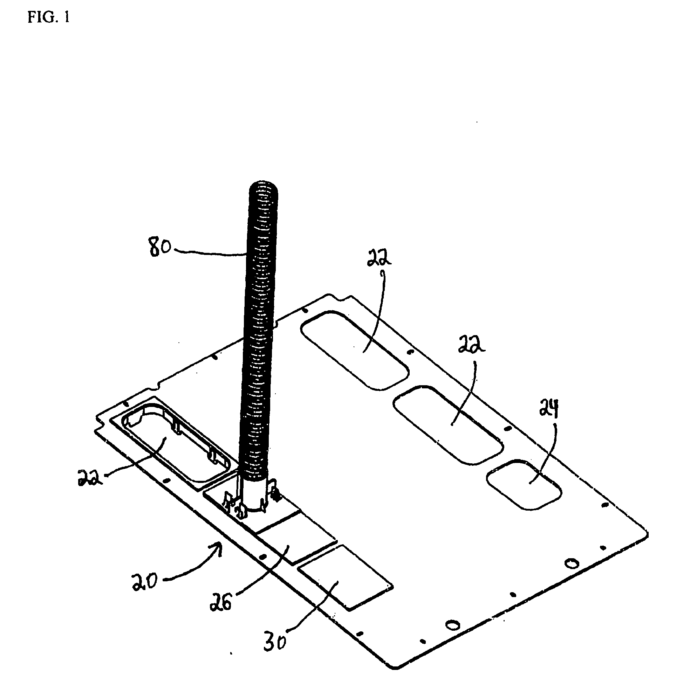

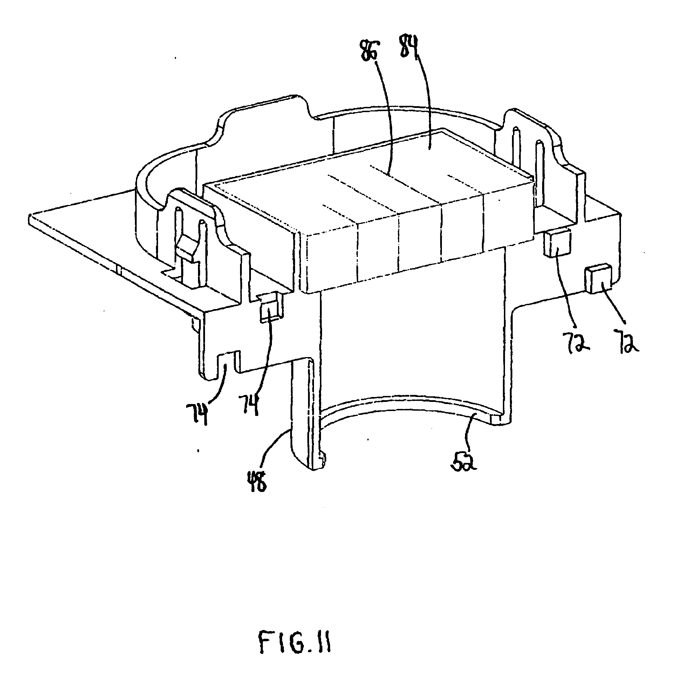

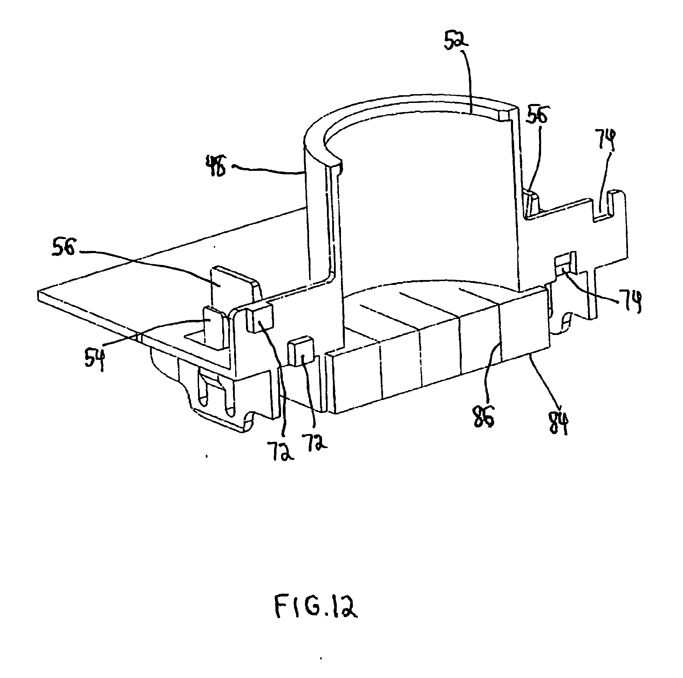

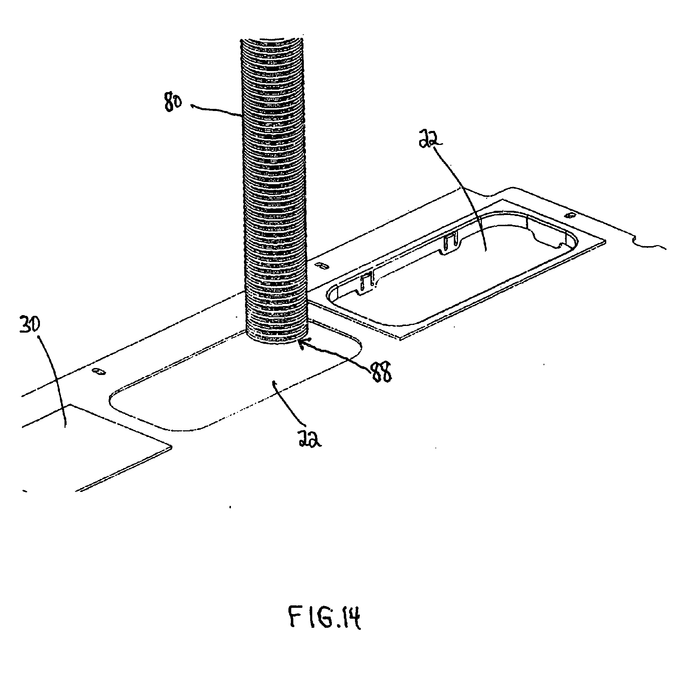

Figs. 1-18 illustrate a fitting system 20 secured to the top of a network cabinet. The network cabinet may include various types of servers, switches and other electronic equipment. Preferably, the network cabinet is Panduit Corp.'s Net-Access™ network cabinet disclosed in U.S. Pat. No. 7,498,512, the disclosure of which is incorporated by reference in its entirety. Fitting system 20 may also be used with other network cabinets.

As shown in Fig. 1, the network cabinet includes four large 22 and two small 24 openings for routing power, copper and fiber cables. However, the network cabinet may include any number of large and small openings. Although Figure 1 shows fitting system 20 secured within opening 22, it is likewise contemplated that fitting system 20 may be secured within opening 24. When fitting system 20 is secured within opening 24, filler panel 26 is not necessary.

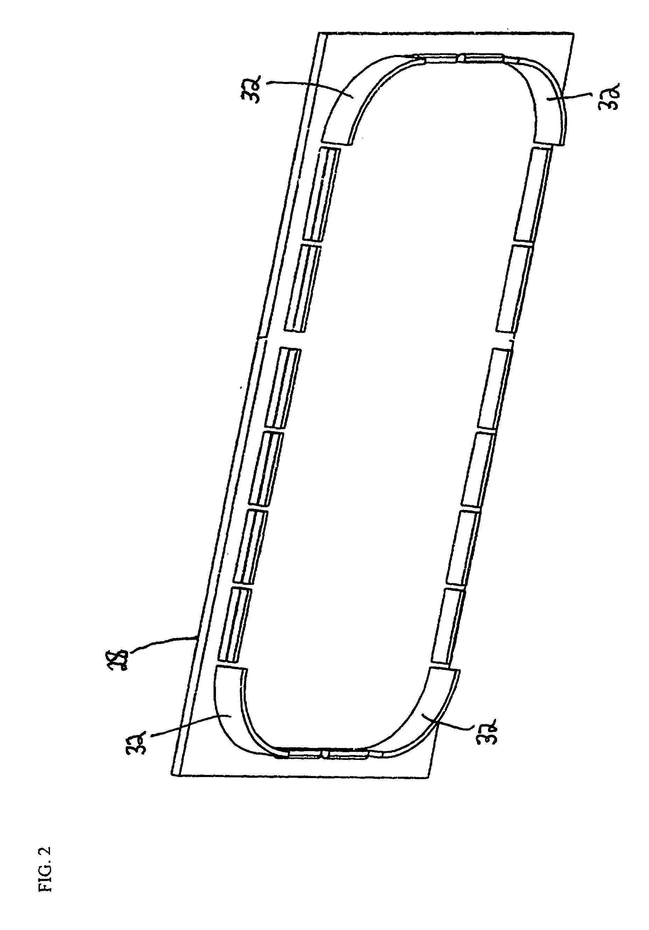

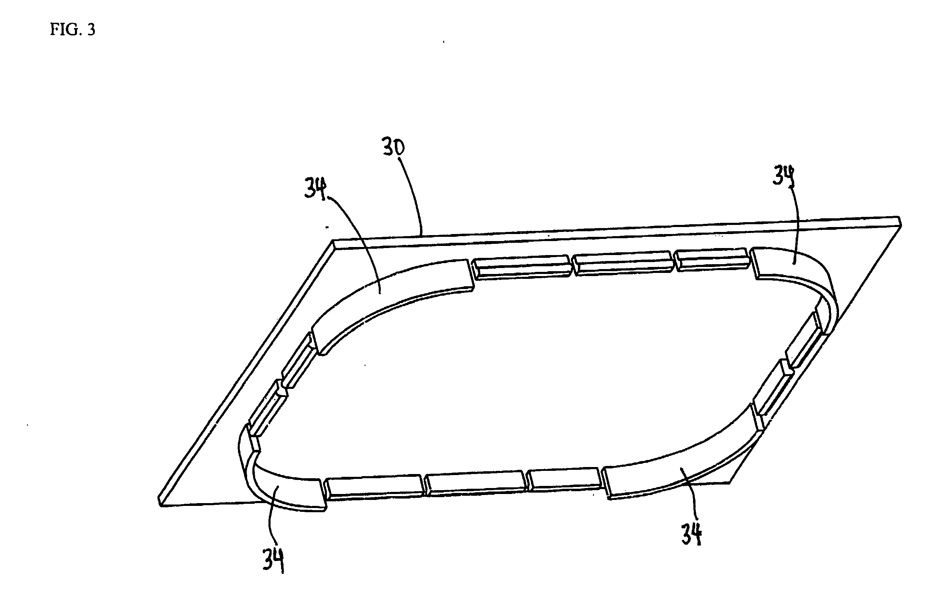

Covers 28, 30 are positioned within large 22 and small 24 openings, respectively. Preferably, covers 28, 30 are made from a semi-rigid or flexible material. Cover 28 fits in a large opening, such as a 3.5 inch by 8.0 inch opening, and cover 30 fits in a small opening, such as a 3.5 inch by 4.5 inch opening. As best seen in Figs. 2 and 3, covers 28, 30 include four extended corners 32, 34 to guide covers 28, 30 into openings 22, 24.

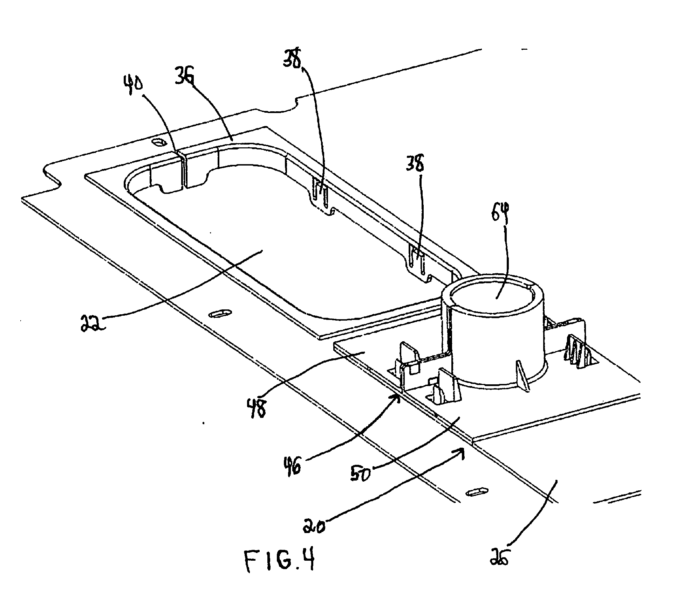

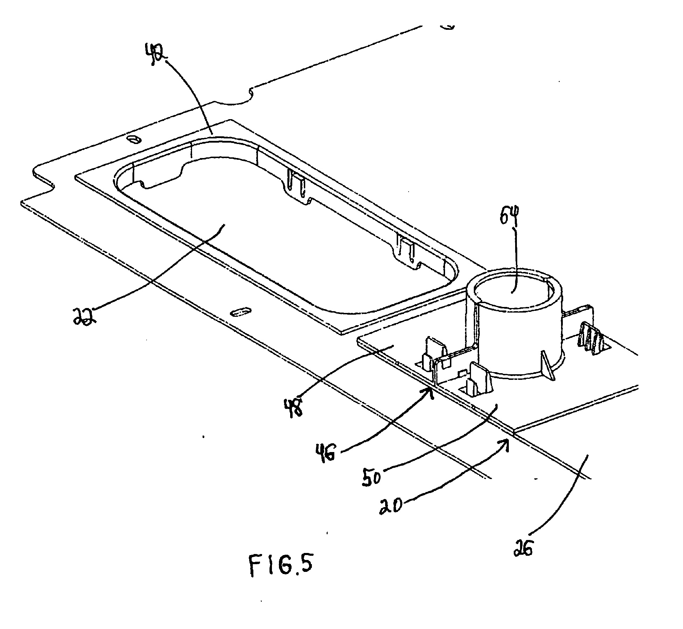

Figs. 4 and 5 illustrate grommet 36 secured within opening 22. Typically, grommet 36 is used when copper cables are routed into the network cabinet from above and an exhaust duct is not attached to the top of the network cabinet. Latches 38 secure grommet 36 within opening 22, and grommet 36 has a slit 40 to allow installation or removal around existing cables. Alternatively, grommet 42 may be used.

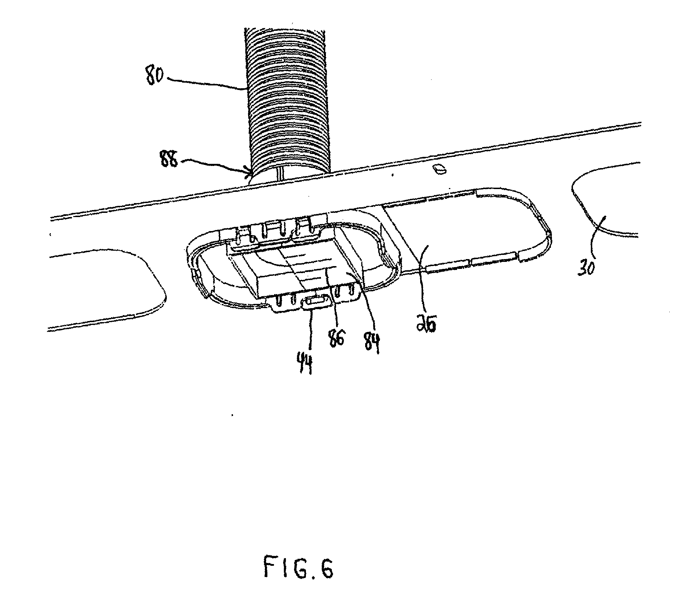

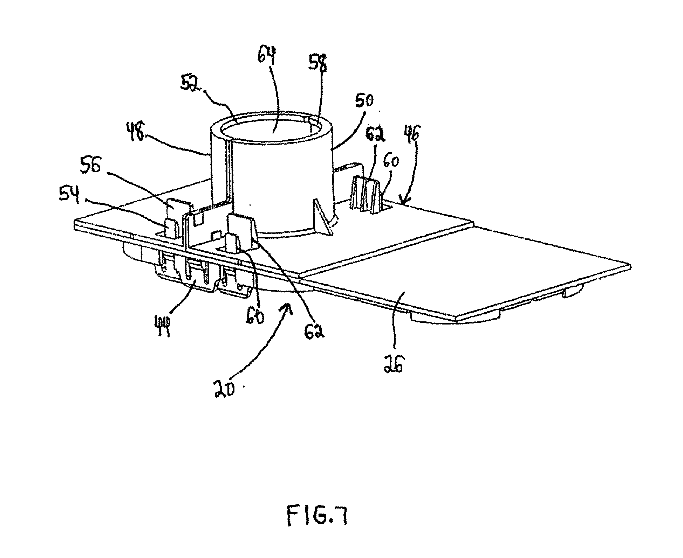

As shown in Figs. 6 and 7, fitting system 20 includes grommet 44, corrugated tube fitting assembly 46 and filler panel 26. Grommet 44 is secured within opening 22. However, grommet 44 does not extend along the entire perimeter of opening 22. Thus, when fitting assembly 46 is installed in grommet 44, open space remains within opening 22. Filler panel 26 may be used to seal this open space. Alternatively, grommet 44 and fitting assembly 46 may be secured within a small opening, such as opening 24.

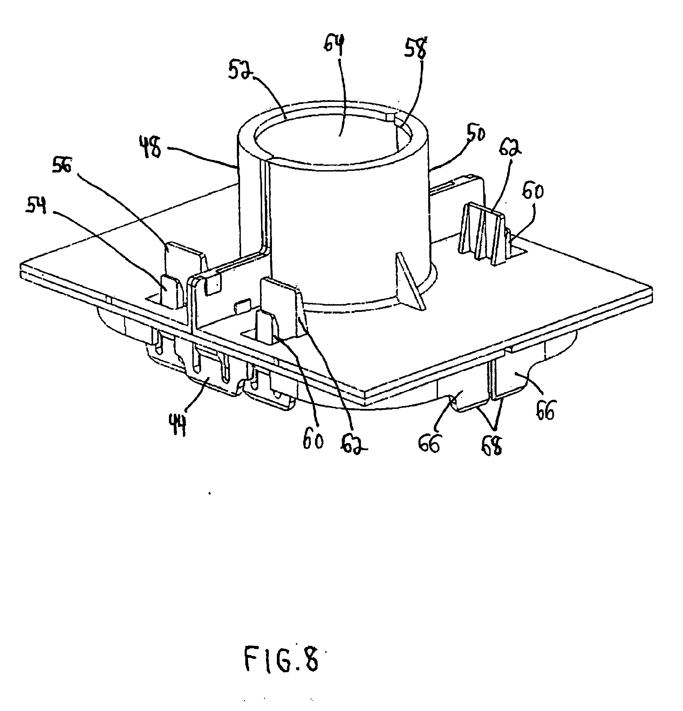

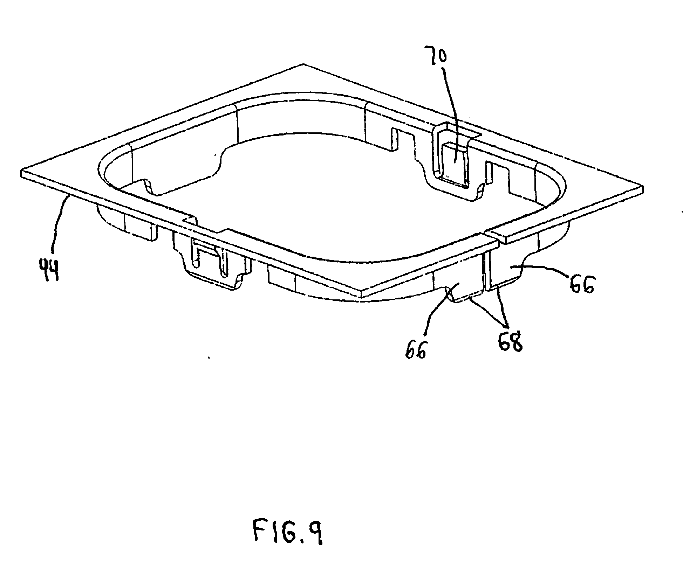

As shown in Fig. 8, fitting assembly 46 includes first portion 48 and second portion 50. Preferably, first portion 48 and second portion 50 are identical. First portion 48 has gripping edge 52, release latches 54 and finger stops 56. Likewise, second portion 50 has gripping edge 58, release latches 60 and finger stops 62. Alternatively, the first and second portions may only include latches. First portion 48 is secured to second portion 50 to form corrugated tube opening 64, and fitting assembly 46 snaps into grommet 44. As best seen in Fig. 9, grommet 44 includes extended lips 66 and chamfered edges 68 to guide grommet 44 into opening 22. Latches 70 secure grommet 44 within opening 22.

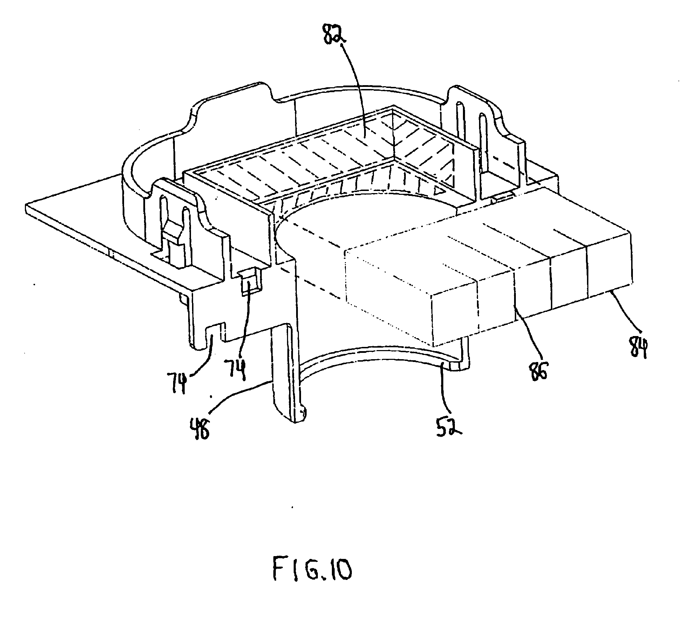

As shown in Figs. 10-12, first portion 48 include alignment features, such as tabs 72 and notches 74. Similarly, second portion 50 includes alignment features, such as tabs and notches. The alignment features secure first 48 and second 50 portions around corrugated tube 80. As best seen in Fig. 10, first portion 48 has an area of adhesive 82 for securing foam insert 84 to first portion 48. Foam insert 84 has slits 86 to improve sealing around cables, and foam insert 84 extends beyond first portion 48 to insure sealing of cables with a pressure fit between first 48 and second 50 portions.

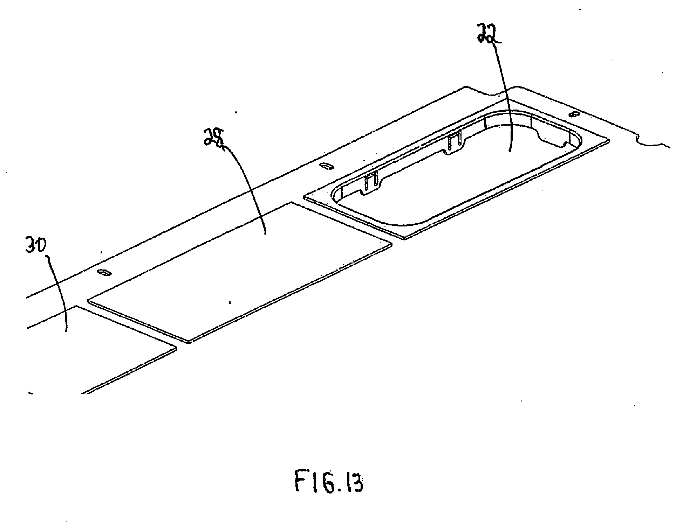

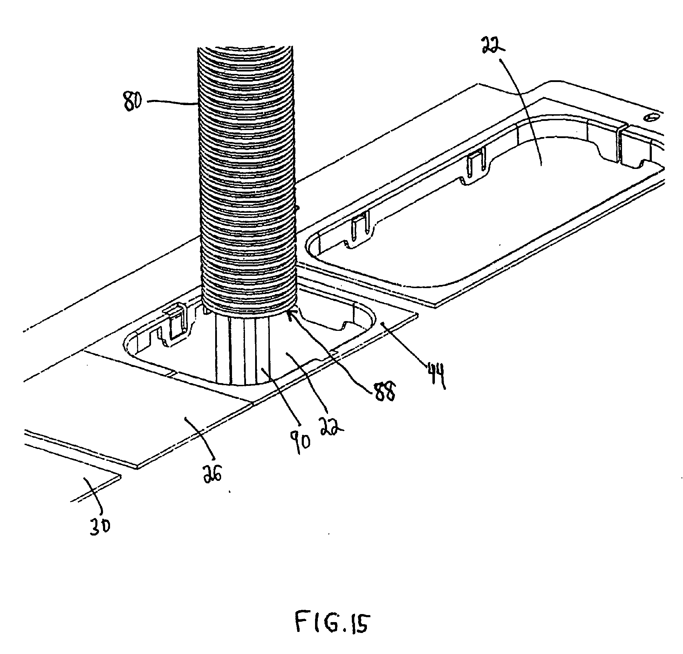

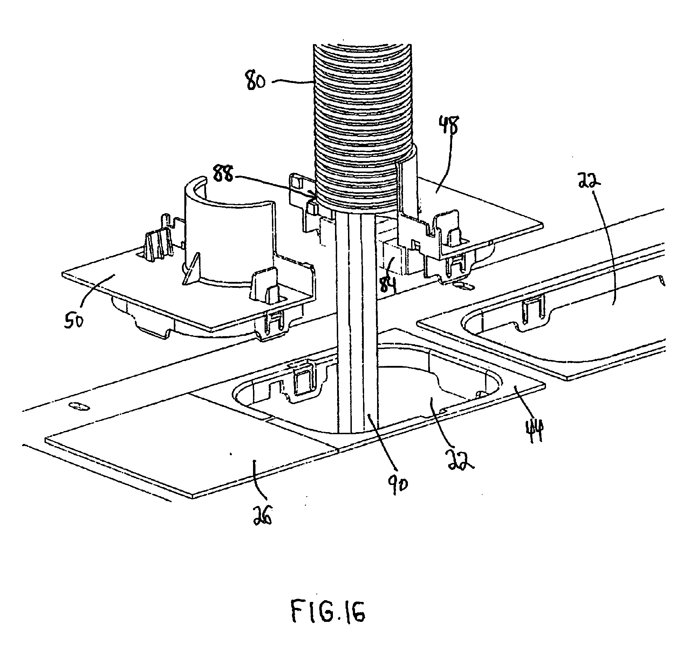

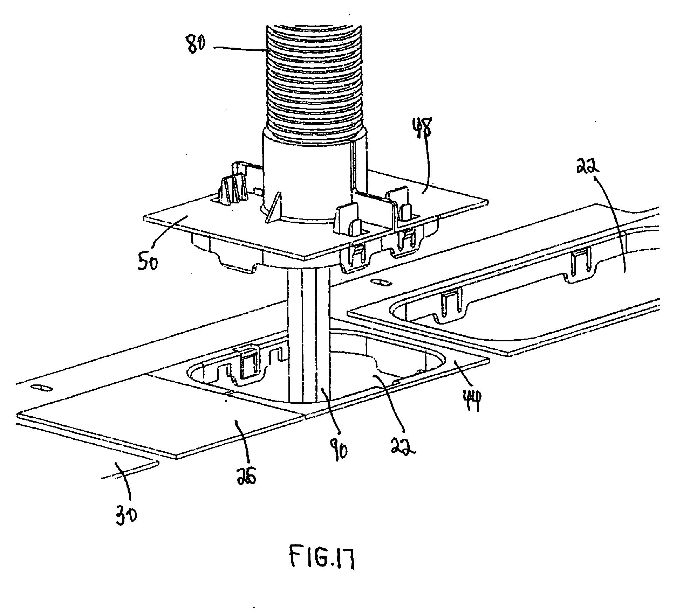

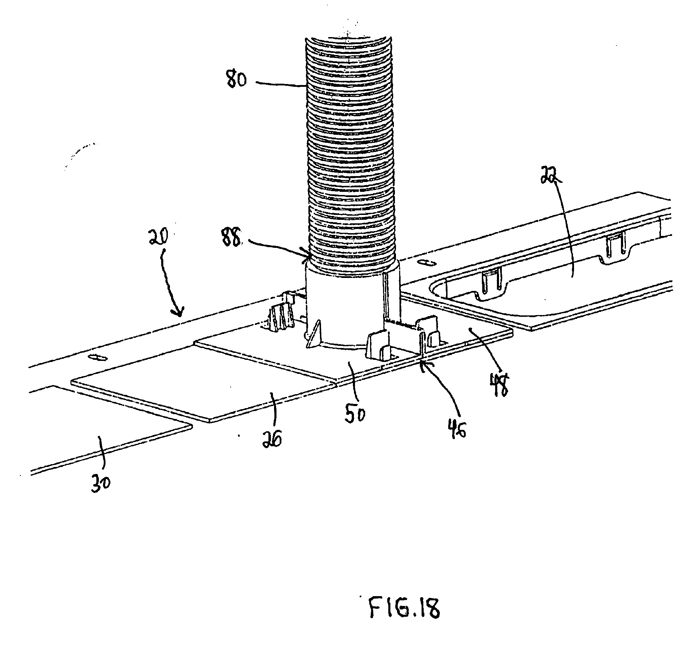

Figs. 13-18 illustrate the installation of fitting system 20 on the top of the network cabinet. As shown in Figs. 13-14, cover 28 is removed to expose opening 22 and corrugated tube 80 is aligned with opening 22. The top end of corrugated tube 80 is attached to a spillover fitting, and bottom end 88 is cut flush with the surface of opening 22. Grommet 44 and filler panel 26 are installed within opening 22. Cables 90 are routed from a cable trough and over a spillover fitting, placed into corrugated tube 80 and passed through grommet 44 into opening 22 (see Fig. 15). As shown in Fig. 16, first 48 and second 50 portions of fitting assembly 46 are positioned around corrugated tube 80 with bottom end 88 aligned with foam insert 84, and first 48 and second 50 portions are pushed together engaging the alignment features (see Fig. 17). Foam inserts 84 seal around cables 88, not around corrugated tube 80. As shown in Fig. 18, fitting assembly 46 is pushed downward until fitting assembly 46 snaps into grommet 44.

According to an example, there is provided a fitting system for sealing an opening in a top of a network cabinet to improve cooling of network equipment, the fitting system comprising: a grommet secured in the opening in the top of the network cabinet; a fitting assembly secured to the grommet, wherein the fitting assembly extends partially along the perimeter of the opening; and a filler panel for sealing the opening adjacent to the fitting assembly.

Optionally, the fitting assembly includes a first portion and a second portion secured to each other to form a tube opening.

Optionally, the first portion and the second portion further comprise alignment features for securing the first portion and the second portion together.

Optionally, the first portion and the second portion are identical.

Optionally, the first portion and the second portion further comprise a foam insert with slits there through for sealing cables passing through the opening.

Optionally, the first portion and the second portion further comprise release latches and finger stops.

Optionally, the first portion and the second portion further comprise latches for engaging the grommet secured in the top of the network cabinet.

Optionally the tube opening is positioned around one end of a corrugated tubing for routing cables.

Optionally, the fitting assembly includes identical first and second portions, wherein the first and second portions include a horizontal member and a vertical member with a semicircular portion, wherein the semicircular portions join to form a tube opening.

Optionally, the first portion and the second portion have gripping edges, wherein the gripping edges are located along an inner wall of the semicircular portions of the first and second portion.

Optionally, the grommet further comprises latches for securing the grommet to the network cabinet and extended lips with chamfered edges.

Optionally, the filler panel further comprises extended corners for guiding the filler panel into the opening.

According to another example, there is provided a fitting system secured to a top opening of a network cabinet for providing a seal around fiber cables passing through a corrugated tube extending from the network cabinet, the fitting system comprising; a grommet secured in the top opening of the network cabinet; and a fitting assembly secured to the grommet, wherein the fitting assembly extends along the perimeter of the opening for sealing the opening.

Optionally, the fitting assembly includes a first portion and a second portion secured to each other to form a tube opening.

Optionally, the first portion and the second portion further comprise alignment features for securing the first portion and the second portion together.

Optionally, the first portion and the second portion are identical.

Optionally, the first portion and the second portion further comprise a foam insert with slits there through for sealing cables passing through the opening.

Optionally, the first portion and the second portion further comprise release latches and finger stops.

Optionally, the first portion and the second portion further comprise latches for securing the fitting assembly to the grommet secured in the top of the network cabinet.

Optionally, the tube opening is positioned around one end of the corrugated tube for routing cables.

Optionally, the fitting assembly includes identical first and second portions, wherein the first and second portions include a horizontal member and a vertical member with a semicircular portion, wherein the semicircular portions join to form a tube opening.

Optionally, the first portion and the second portion have gripping edges, wherein the gripping edges are located along an inner wall of the semicircular portions of the first and second portion.

Optionally, the grommet further comprises latches for securing the grommet to the network cabinet and extended lips with chamfered edges.

According to a further example, there is provided a network cabinet having a plurality of openings in a top of the network cabinet and a fitting system secured to the top openings in the network cabinet, the fitting system comprising: a plurality of covers secured within the openings; at least one grommet secured within at least one of the openings; and at least one fitting assembly secured to the grommet.

Optionally, the fitting assembly extends along the perimeter of at least one opening.

Optionally, the fitting assembly extends partially along the perimeter of at least one opening and the fitting system further comprising a filler panel for sealing an opening adjacent to the fitting assembly.

Furthermore, while the particular preferred embodiments of the present invention have been shown and described, it will be obvious to those skilled in the art that changes and modifications may be made without departing from the teaching of the invention. The matter set forth in the foregoing description and accompanying drawings is offered by way of illustration only and not as limitation. The actual scope of the invention is intended to be defined in the following claims when viewed in their proper perspective based on the prior art.

## Claims

1. A fitting system secured to a top opening of a network cabinet for providing a seal around fiber cables passing through a corrugated tube extending from the network cabinet, the fitting system comprising;
a grommet secured in the top opening of the network cabinet; and
a fitting assembly secured to the grommet, wherein the fitting assembly extends along the perimeter of the opening for sealing the opening.

2. The fitting system of claim 1, wherein the fitting assembly extends partially along the perimeter of the opening; and
a filler panel seals the opening adjacent to the fitting assembly.

3. The fitting system of claim 2, wherein the filler panel further comprising extend corners for guiding the filler panel into the opening.

4. The fitting system of claim 1, wherein the fitting assembly includes a first portion and a second portion secured to each other to form a tube opening.

5. The fitting system of claim 4, wherein the first portion and the second portion further comprising alignment features for securing the first portion and the second portion together.

6. The fitting system of claim 4, wherein the first portion and the second portion are identical.

7. The fitting system of claim 4, wherein the first portion and the second portion further comprising a foam insert with slits there through for sealing cables passing through the opening.

8. The fitting system of claim 4, wherein the first portion and the second portion further comprising release latches and finger stops.

9. The fitting system of claim 4, wherein the first portion and the second portion further comprising latches for securing the fitting assembly to the grommet secured in the top of the network cabinet.

10. The fitting system of claim 4, wherein the tube opening is positioned around one end of the corrugated tube for routing cables.

11. The fitting system of claim 1, wherein the fitting assembly including identical first and second portions, wherein the first and second portions include a horizontal member and a vertical member with a semicircular portion, wherein the semicircular portions join to form a tube opening.

12. The fitting system of claim 11, wherein the first portion and the second portion having gripping edges, wherein the gripping edges are located along an inner wall of the semicircular portions of the first and second portion.

13. The fitting system of claim 1, wherein the grommet further comprising latches for securing the grommet to the network cabinet and extended lips with chamfered edges.
